Europäisches Patentamt

European Patent Office

Office européen des brevets

(11) Publication number: **0 362 975**
**A2**

## (12) EUROPEAN PATENT APPLICATION

(21) Application number: 89250050.5

(22) Date of filing: 03.10.89

(51) Int. Cl.⁵: **A23L 3/00**

(30) Priority: 03.10.88 ZA 887403

(43) Date of publication of application:
**11.04.90 Bulletin 90/15**

(84) Designated Contracting States:
**AT BE CH DE ES FR GB GR IT LI NL SE**

(71) Applicant: **DEEPFREEZING & PRESERVING (PROPRIETARY) LIMITED**
**Reeb Road**
**Firgrove Cape Province(ZA)**

(72) Inventor: **Ackermann, Coenraad Christoffel Andries**
**32 Drommedaris Road**
**Somerset West Cape Province(ZA)**

(74) Representative: **Goddar, Heinz J., Dr. et al**
**FORRESTER & BOEHMERT**
**Widenmayerstrasse 4/I**
**D-8000 München 22(DE)**

(54) Method of pasteurizing and aseptically packaging food pieces, and installation therefor.

(57) An installation 10 for the pasteurization and aseptic packaging of food pieces, comprises a positive displacement pump 12, a pasteurizer 14, a bleed-off device 16, control means 18 for the bleed-off device, and an aseptic packaging machine 20. A liquid medium is added to the food pieces prior to pasteurization, via a pipeline 26, and liquid medium is withdrawn again at the bleed-off device 16 via a pipeline 82 and a lobe pump 84. The control means 18 comprises a flow meter 28 in the flow line 26, a flow meter 90 in the delivery 86 of the lobe pump, a ratio controller 114, and a speed controller 104 controlling the speed of the lobe pump. This maintains a predetermined ratio between the liquid medium withdrawn from the flowstream at the bleed-off device 16, and the liquid medium added via the pipeline 26.

FIG. 1

Xerox Copy Centre

# Method of pasteurizing and aseptically packaging food pieces, and installation therefor

THIS INVENTION relates to a method of pasteurizing and aseptically packaging food pieces, and to an installation for use in the method.

The invention finds particular application in the aseptic packaging of delicate foods such as fruit pieces, e.g. slices, dices, halves, or the like. The conventional method of packaging a product of this nature consists of pasteurizing the product on a continuous basis, and packaging the pasteurized product in pre-sterilized packages by means of aseptic packaging equipment. During pasteurization of the fruit pieces, it is necessary for them to be entrained in a liquid flow steam. The liquid has two functions. First, it acts as a transport medium for transporting the fruit pieces through the pasteurizing equipment. If too little liquid is present, excessive pressure is required to move the product through the equipment, and this causes mechanical damage to the fruit pieces. Second, the liquid acts as a heat transfer medium, to transfer heat to the fruit pieces during the heating phase of the pasteurizing process, and to transfer heat from the fruit pieces during the cooling phase of the pasteurizing process. If too little liquid is present, effective heat transfer cannot take place. As a result, parts of the fruit pieces may be over-heated, causing heat damage to the pieces, whereas other parts may not be heated to a sufficiently high temperature to ensure pasteurization.

When packaging the food product, on the other hand, it is often desirable for the product to have a high "maximum drained weight". The maximum drained weight is the percentage ratio between the weight of the product when fully drained and the weight of the product as packaged. The liquid usually has little or no commercial value, yet adds to the bulk of the product. A low maximum drained weight thus leads to inefficiencies in packaging and transportation.

It is an object of the present invention to provide an installation for pasteurizing and aseptically packaging delicate food pieces, in which the conditions are such that mechanical and heat damage to the food pieces is avoided, yet is able to produce a packaged product which has a high maximum drained weight. It is a further object of the invention to provide an installation in which it is possible to accurately control the maximum drained weight of the packaged product so that it remains constant throughout a production run, and so that it can easily, if desired, be varied from one production run to another.

According to one aspect of the invention there is provided an installation for the pasteurization and aseptic packaging of food pieces, the installation comprising:

pasteurizing means;

aseptic packaging means downstream of the pasteurizing means;

means for adding a liquid medium to the food pieces upstream of the pasteurizing means;

means for pumping the liquid medium with the food pieces entrained therein as a flowstream through the pasteurizing means to the aseptic packaging means;

bleed-off means between the pasteurizing means and the aseptic packaging means, the bleed-off means being such as to permit only liquid medium to leave the flowstream, the food pieces being retained in the flowstream, and the bleed-off means leading to a bleed-off passage for the flow of liquid medium that has left the flowstream; and

positive displacement means in the bleed-off passage, for controlling the rate at which said liquid medium leaves the flowstream.

The installation may further comprise :

first measuring means for measuring the flow rate of liquid medium added to the food pieces upstream of the pasteurizing means; and

second measuring means for measuring the flow rate of liquid medium in the bleed-off passage;

the positive displacement means being operative in response to the first measuring means and the second measuring means to maintain a predetermined ratio between the flow rate of liquid medium added to the fruit pieces upstream of the pasteurizing means and the flow rate of liquid medium in the bleed-off passage.

The positive displacement means may be in the form of a lobe pump.

According to another aspect of the invention there is provided an installation for the pasteurization and aseptic packaging of food pieces, the installation comprising:

pasteurizing means;

aseptic packaging means downstream of the pasteurizing means;

means for adding a liquid medium to the food pieces upstream of the pasteurizing means;

means for pumping the liquid medium with the food pieces entrained therein as a flowstream through the pasteurizing means to the aseptic packaging means;

bleed-off means between the pasteurizing means and the aseptic packaging means, the bleed-off means being such as to permit only liquid medium to leave the flowstream, the food pieces being retained in the flowstream, and the bleed-off means leading to a bleed-off passage for the flow of liquid medium that has left the flowstream;

first measuring means for measuring the flow rate of liquid medium added to the food pieces upstream of the pasteurizing means;

second measuring means for measuring the flow rate of liquid medium in the bleed-off passage; and

flow control means in the bleed-off passage, the flow control means being operative in response to the first measuring means and the second measuring means to maintain a predetermined ratio between the flow rate of liquid medium added to the food pieces upstream of the pasteurizing means and the flow rate of liquid medium in the bleed-off passage.

The bleed-off device may comprise an in-line tubular screen whose walls are formed by a plurality of circumferentially spaced, longitudinally extending wires, each pair of adjacent wires defining between them a slot which diverges from the inside of the screen outwardly.

The tubular screen may be located in a casing which defines a circumferentially extending chamber on the outside of the screen, the bleed-off passage leading from the chamber.

There may be a closure valve in the bleed-off passage.

There may be a pressure sensor for sensing the pressure in the bleed-off passage, the closure valve being operative in response to the pressure sensor to close the bleed-off passage when the pressure in the bleed-off passage drops to below a predetermined value.

_ According to yet another aspect of the invention there is provided an installation for the pasteurization and aseptic packaging of food pieces, the installation comprising:

pasteurizing means;

aseptic packaging means downstream of the pasteurizing means;

means for adding a liquid medium to the food pieces entrained therein as a flowstream through the pasteurizing means to the aseptic packaging means; and

bleed-off means between the pasteurizing means and the aseptic packaging means, the bleed-off means being such as to permit only liquid medium to leave the flowstream, the food pieces being retained in the flowstream;

the bleed-off means comprising an in-line tubular screen located in a casing which defines a circumferentially extending chamber on the outside of the screen, means defining bleed-off passage leading from the chamber, a closure valve in the bleed-off passage, and a pressure sensor for sensing the pressure in the bleed-off passage, the closure valve being operative in response to the pressure sensor to close the bleed-off passage when the pressure in the bleed-off passage drops to below a predetermined value.

Further according to the invention there is provided a method of pasteurizing and aseptically packaging food pieces, the method comprising :

adding a liquid medium to the food pieces to form a first flowstream of liquid medium with food pieces entrained therein;

passing the first flowstream through a pasteurizer, thereby to pasteurize the liquid medium and the food pieces entrained therein;

withdrawing liquid medium from the first flowstream downstream of the pasteurizer, to form a second flowstream with a reduced liquid content and a third flowstream of liquid medium that has been withdrawn from the first flow stream;

measuring the flow rate of liquid medium added to the food pieces upstream of the pasteurizer and/or measuring the flow rate of liquid medium in the third flowstream;

controlling the flow rate of liquid medium in the third flowstream in relation to the flow rate of liquid medium added to the food pieces upstream of the pasteurizer, to maintain a predetermined ratio between the flow rate of liquid medium in the third flowstream and the flow rate of liquid medium added to the food pieces upstream of the pasteurizer; and

aseptically packaging the content of the second flowstream.

The invention will now be described in more detail, by way of example, with reference to the accompanying drawings.

In the drawings:

Figure 1 is a schematic layout of an installation in accordance with the invention, for the pasteurization and aseptic packaging of a food product;

Figure 2 is a side view of a bleed-off device forming part of the installation;

Figure 3 is a view of the bleed-off device on line III-III in Figure 2;

Figure 4 is a detailed side view of the bleed-off device, shown partly in longitudinal section;

Figure 5 is a side view of a screen forming part of the bleed-off device, drawn to a smaller scale than Figure 4; and

Figure 6 is a cross section of the bleed-off device, on line VI-VI in Figure 4.

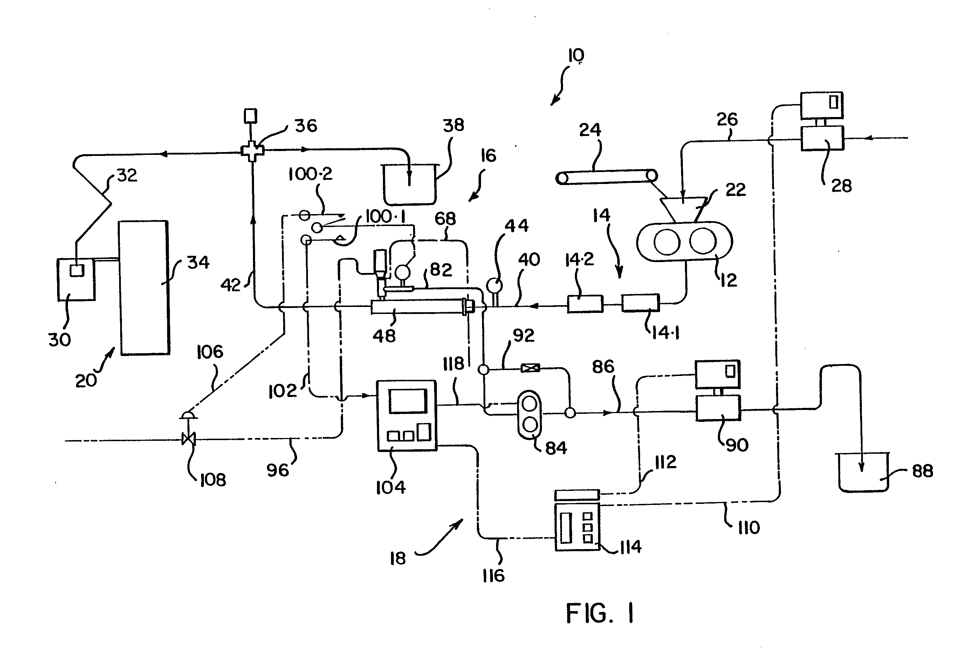

Referring first to Figure 1, reference numeral 10 generally indicates an installation for the pasteurization and aseptic packaging of fruit pieces such as slices, dices, halves, or the like. The installation comprises a positive displacement pump 12, a pasteurizer 14, a bleed-off device 16, control means 18 for the bleed-off device, and an aseptic packaging machine 20.

The positive displacement pump 12 has an intake hopper 22. There is a conveyor 24 for feeding fruit pieces into the intake hopper, and a pipeline 26 for feeding a liquid medium into the intake hopper. The pipeline 26 is fitted with an electromagnetic flow meter 28.

The pasteurizer 14 comprises a heating section 14.1 and a cooling section 14.2. The heating section 14.1 serves to heat the product to a temperature of about 92 to 97°C, whereas the cooling section 14.2 serves to cool the product down again to 16 to 25°C.

The packaging machine 20 is of a conventional design. It comprises a filler head 30 mounted at the end of a retractable arm 32, and a control panel 34.

Between the bleed-off device 16 and the packaging machine 20 there is a three-way valve 36 whereby product can be diverted from the packaging machine to a sump 38 if required.

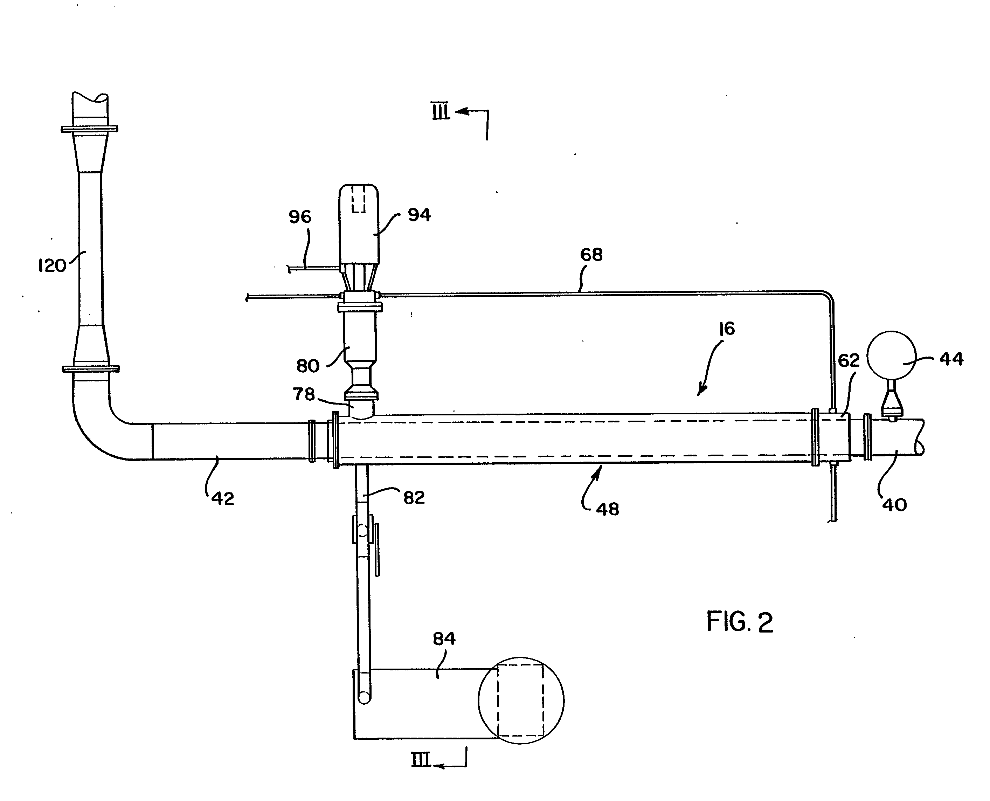

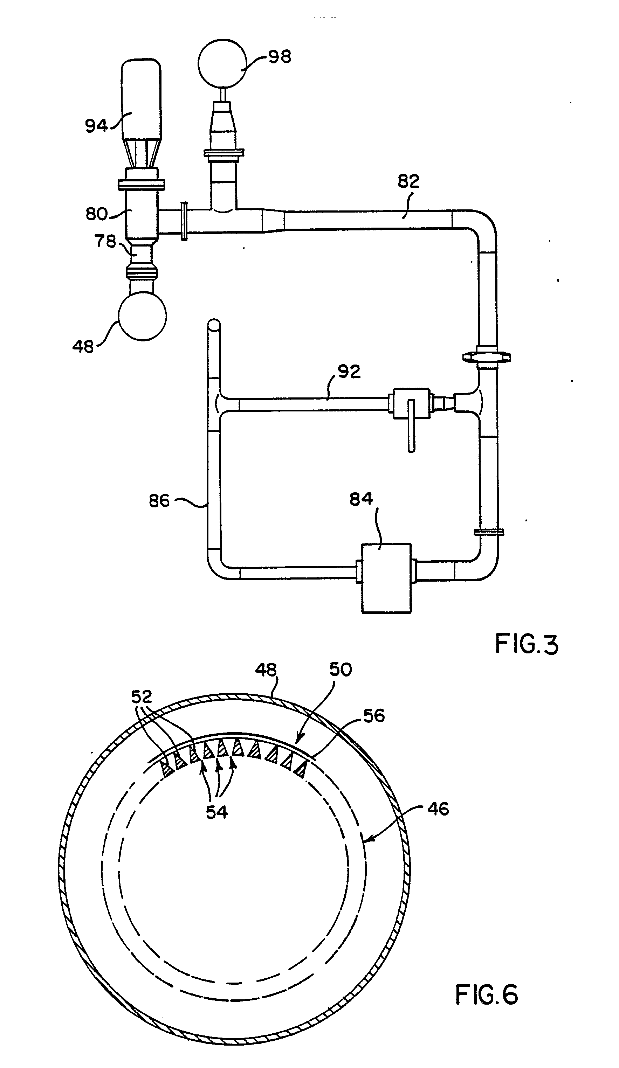

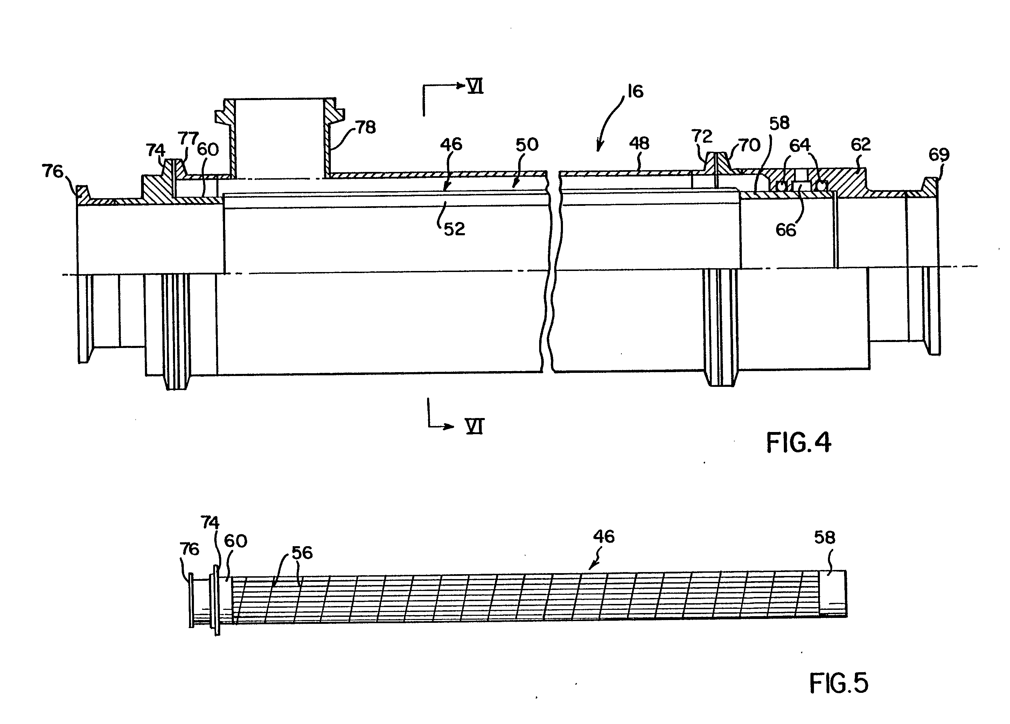

The bleed-off device 16 will now be described in more detail with reference also to Figures 2 to 6. The bleed-off device is connected between the end of a tube 40 which leads from the pasteurizer 14 and the beginning of a tube 42 which leads to the packaging machine 20. A pressure gauge 44 is connected to the tube 40 immediately upstream of the bleed-off device 16.

The bleed-off device 16 comprises an in-line tubular screen 46, and a casing 48 which defines a chamber 50 on the outside of the screen.

The screen 46 is of the wedge-wire type, comprising a plurality of circumferentially spaced screen wires 52, each pair of adjacent screen wires defining between them a slot 54 which diverges from the inside of the screen to the outside. The screen wires 52 are connected together by means of bracing wires 56. At the inlet end of the screen 46 there is welded a length of unperforated tubing 58. Likewise, at the outlet end, there is welded a length of unperforated tubing 60. The casing 48 is connected to the tube 40 by means of an end fitting 62 which is able to accommodate the unperforated end 58 of the screen 46 with little clearance. The fitting 62 has a pair of internal annular grooves each of which houses a rubber O-ring 64, the O-rings forming a seal between the inside of the fitting 62 and the end 58. In the region between the O-rings 64 there is an annular groove 66. This is connected to a steam line 68 (see Figures 1 and 2). In operation, steam is circulated through the groove 66, so as to maintain the region in an aseptic condition. The fitting 62 further has flanges 69 and 70 at opposite ends thereof, the flanges being shaped to receive conventional aseptic clamps (not shown). The flange 69 is used to connect the bleed-off device to the tube 40, whereas the flange 70 serves to connect the fitting 62 to the casing 48. For this purpose the casing 48 has a complementary flange 72.

The end 60 of the screen 46 has a pair of flanges 74 and 76. The flange 74 is used to connect the screen to the casing 48 by means of an aseptic clamp (not shown), the casing having, for this purpose, a complementary flange 77. The flange 76 serves to connect the bleed-off device to the tube 42.

The screen 46 can readily be removed by undoing the two aseptic clamps at the end 60 and removing part of the tube 42. The screen 46 can then be withdrawn from the casing 48 for cleaning purposes or to be replaced or interchanged with a screen having different characteristics.

The casing 48 has an outlet 78 which leads via a pneumatic valve 80 and a pipeline 82 to a lobe pump 84. The lobe pump is driven by a variable speed electric motor. The discharge of the lobe pump 84 leads via a pipeline 86 to a bleed-off return sump 88. The outlet 78, and the pipelines 82 and 86 form a bleed-off passage. In the pipeline 86 there is an electromagnetic flow meter 90. If desired, a closable by-pass 92 may be provided to enable the lobe pump 84 to be by-passed. During normal operation, however, the by-pass 92 will be closed.

The pneumatic valve 80 has a valve actuator 94 which is operated by means of compressed air fed to the valve actuator via a compressed air line 96. The steam line 68 is also connected to the pneumatic valve 80 to keep the valve in an aseptic condition.

Downstream of the pneumatic valve 80, in the line 82, there is a dual limit pressure gauge 98. This is provided with electrical contacts 100.1 and 100.2 (shown diagrammatically in Figure 1). The contact 100.1 leads via a signal line 102 to a first input of an electronic speed controller 104, whereas the contact 100.2 leads via a signal line 106 to a valve 108 in the compressed air line 96.

The flow meters 28 and 90 are connected, via signal lines 110 and 112 respectively, to inputs of an electronic ratio controller 114. The output of the ratio controller 114 is connected via a signal line 116 to a second input of the speed controller 104. The output of the speed controller 104 is connected via a signal line 118 to the variable speed motor of the lobe pump 84, and serves to control the speed and thus the throughput of the latter.

Prior to using the installation, it is sterilized by passing hot water under pressure (at 110°C) through the system.

In operation, fruit pieces are fed into the pump 12 by means of the conveyor 24, and a liquid medium is fed into the pump via the pipeline 26. The liquid medium may, for example, by syrup, or a puree. The flow rate of liquid medium fed into the pump is measured by the flow meter 28.

The pump 12 pumps the liquid medium in which the fruit pieces are now entrained through the pasteurizer 14 and the bleed-off device 16 to the aseptic packaging machine 20. The flow line from the bleed-off device to the filler head 30 of the aseptic packaging machine is relatively long so that, during normal operation, the pressure in the bleed-off device is well above atmospheric pressure. Should a higher back pressure be required, a constricted section 120 (see Figure 2) may be inserted in the flow line 42 from the bleed-off device to the aseptic packaging machine.

In the bleed-off device 16 liquid medium will flow through the slots 54 into the chamber 50, and from there via the outlet connection 78, the pneumatic valve 80, the pipeline 82, the lobe pump 84, and the pipeline 86 to the bleed-off return sump 88. The flow rate of liquid medium from the chamber 50 via the pipeline 82 will be determined accurately by the speed of the lobe pump 84, the lobe pump being a positive displacement device.

The ratio controller 114 determines the ratio between the flow rate measured by the flow meter 90 and that measured by the flow meter 28. If this ratio is higher than a predetermined value set on the ratio controller 114, the speed controller 104 will, via the signal line 118, speed up the pump 84 and thus increase its throughput until the predetermined ratio has been attained. Vice versa, if the ratio determined by the ratio controller 114 is lower than the predetermined ratio, the speed controller 104 will slow down the pump 84. In this manner it is possible to control accurately the maximum drained weight of the packaged product.

Should the pressure in the chamber 50 drop to below a first limit value, the contacts 100.1 will be actuated. This will send a signal via the signal line 102 to the speed controller 104 which in turn will shut off the lobe pump altogether. Should the pressure in the chamber 50 drop even lower, to beyond a second limit value, the contacts 100.2 will be actuated. This will, via the signal line 106, shut off the compressed air supply to the valve actuator 94, causing the valve 80 to shut. This will prevent further liquid flow from the chamber 50 via the outlet 78 and will also prevent reverse flow of liquid from the pipeline 82 into the chamber. If desired, the contacts 100.2 may also be coupled to an alarm.

It is to be noted that there is a finite length of pipeline 82 between the valve 80 and the lobe pump 84. The liquid medium in the pipeline 82, upstream of the lobe pump 84, is normally in an aseptic condition. From the lobe pump 84 onward, there is the risk of contamination taking place, so that the liquid medium in this part of the equipment is no longer necessarily in an aseptic condition. The pipeline 82 is sufficiently long so that, should the pressure in the chamber 50 drop and reverse flow of liquid medium take place during the time that it takes for the valve 80 to close, contaminated liquid medium from the pipeline 86 is unable to reach the chamber 50. Bleed-off thus takes place under aseptic conditions at all times.

## Claims

1. An installation for the pasteurization and aseptic packaging of food pieces, the installation comprising:
pasteurizing means (14);
aseptic packaging means (20) downstream of the pasteurizing means (14);
means (26) for adding a liquid medium to the food pieces upstream of the pasteurizing means (14);
means (12) for pumping the liquid medium with the food pieces entrained therein as a flowstream through the pasteurizing means (14) to the aseptic packaging means (20);
characterised by
bleed-off means (16) between the pasteurizing means (14) and the aseptic packaging means (20), the bleed-off means being such as to permit only liquid medium to leave the flowstream, the food pieces being retained in the flowstream, and the bleed-off means leading to a bleed-off passage (78, 82, 86) for the flow of liquid medium that has left the flowstream; and
positive displacement means (84) in the bleed-off passage, for controlling the rate at which said liquid medium leaves the flowstream.

2. An installation as claimed in claim 1, characterised by :
first measuring means (28) for measuring the flow rate of liquid medium added to the food pieces upstream of the pasteurizing means (14); and
second measuring means (90) for measuring the flow rate of liquid medium in the bleed-off passage;
the positive displacement means (84) being operative in response to the first measuring means (28) and the second measuring means (90) to maintain a predetermined ratio between the flow rate of liquid medium added to the fruit pieces upstream of the pasteurizing means and the flow rate of liquid medium in the bleed-off passage.

3. An installation as claimed in claim 2, characterised therein that the positive displacement means (84) is in the form of a lobe pump.

4. An installation for the pasteurization and aseptic packaging of food pieces, the installation comprising:
pasteurizing means (14);
aseptic packaging means (20) downstream of the pasteurizing means (14);
means (26) for adding a liquid medium to the food pieces upstream of the pasteurizing means (14);
means (12) for pumping the liquid medium with the food pieces entrained therein as a flowstream through the pasteurizing means (14) to the aseptic packaging means (20);
characterised by
bleed-off means (16) between the pasteurizing means (14) and the aseptic packaging means (16), the bleed-off means being such as to permit only liquid medium to leave the flowstream, the food pieces being retained in the flowstream, and the bleed-off means leading to a bleed-off passage (78, 82, 86) for the flow of liquid medium that has left the flowstream;
first measuring means (28) for measuring the flow rate of liquid medium added to the food pieces upstream of the pasteurizing means (14);
second measuring means (90) for measuring the flow rate of liquid medium in the bleed-off passage; and
flow control means (84) in the bleed-off passage, the flow control means being operative in response to the first measuring means (28) and the second measuring means (90) to maintain a predetermined ratio between the flow rate of liquid medium added to the food pieces upstream of the pasteurizing means and the flow rate of liquid medium in the bleed-off passage.

5. An installation as claimed in any one of the preceding claims, characterised in that the bleed-off device (16) comprises an in-line tubular screen (46) whose walls are formed by a plurality of circumferentially spaced, longitudinally extending wires (52), each pair of adjacent wires defining between them a slot (54) which diverges from the inside of the screen outwardly.

6. An installation as claimed in claim 5, characterised in that the tubular screen (46) is located in a casing (48) which defines a circumferentially extending chamber (50) on the outside of the screen, the bleed-off passage (78) leading from the chamber.

7. An installation as claimed in any one of the preceding claims, characterised in that there is a closure valve (80) in the bleed-off passage (78, 82, 86).

8. An installation as claimed in claim 7, characterised in that there is a pressure sensor (98) for sensing the pressure in the bleed-off passage (72, 82, 86), the closure valve (80) being operative in response to the pressure sensor (98) to close the bleed-off passage when the pressure in the bleed-off passage drops to below a predetermined value.

9. An installation for the pasteurization and aseptic packaging of food pieces, the installation comprising:
pasteurizing means (14);
aseptic packaging means (20) downstream of the pasteurizing means (14);
means (26) for adding a liquid medium to the food pieces upstream of the pasteurizing means (14);
means (12) for pumping the liquid medium with the food pieces entrained therein as a flowstream through the pasteurizing means (14) to the aseptic packaging means (20);
characterised by
bleed-off means (16) between the pasteurizing means (14) and the aseptic packaging means (20), the bleed-off means being such as to permit only liquid medium to leave the flowstream, the food pieces being retained in the flowstream;
the bleed-off means comprising an in-line tubular screen (46) located in a casing (48) which defines a circumferentially extending chamber (50) on the outside of the screen, means defining a bleed-off passage (78, 82, 86) leading from the chamber, a closure valve (80) in the bleed-off passage, and a pressure sensor (98) for sensing the pressure in the bleed-off passage, the closure valve being operative in response to the pressure sensor to close the bleed-off passage when the pressure in the bleed-off passage drops to below a predetermined value.

10. A method of pasteurizing and aseptically packaging food pieces, the method comprising :
adding a liquid medium (26) to the food pieces to form a first flowstream of liquid medium with food pieces entrained therein;
passing the first flowstream through a pasteurizer (14), thereby to pasteurize the liquid medium and the food pieces entrained therein;
characterised in that it includes the steps of
withdrawing liquid medium (16) from the first flowstream downstream of the pasteurizer (14), to form a second flowstream (42) with a reduced liquid content and a third flowstream (82) of liquid medium that has been withdrawn from the first flow stream;
measuring the flow rate (28) of liquid medium added to the food pieces upstream of the pasteurizer (14) and/or measuring the flow rate (90) of liquid medium in the third flowstream;
controlling the flow rate (84) of liquid medium in the third flowstream in relation to the flow rate of liquid medium added to the food pieces upstream of the pasteurizer, to maintain a predetermined ratio between the flow rate of liquid medium in the third flowstream and the flow rate of liquid medium added to the food pieces upstream of the pasteurizer; and
aseptically packaging (20) the content of the second flowstream.

FIG. 1

FIG. 2

EP 0 362 975 A2

FIG.3

FIG.6

FIG.4

FIG.5

EP 0 362 975 A2